# EUROPÄISCHE PATENTSCHRIFT

(11) **EP 3 338 558 B1**
(45) Veröffentlichungstag und Bekanntmachung des Hinweises auf die Patenterteilung: **01.04.2020**
(21) Anmeldenummer: 17205641.8
(22) Anmeldetag: 06.12.2017
(51) Int. Cl.: A23F 5/08, A47J 42/16, A47J 42/18, A47J 42/36, B02C 4/06

(54) **MAHLVORRICHTUNG ZUM FEINMAHLEN VON KÖRNERFRÜCHTEN, INSBESONDERE KAFFEEBOHNEN**
MILLING DEVICE FOR FINE MILLING OF GRANULAR FOODSTUFF, ESPECIALLY COFFEE BEANS
APPAREIL DE BROYAGE DESTINÉ AU BROYAGE FIN DE GRAINS, EN PARTICULIER DES GRAINS DE CAFÉ

(30) Priorität: 22.12.2016 DE 102016125341
(43) Veröffentlichungstag der Anmeldung: 27.06.2018
(73) Patentinhaber: Bauermeister Zerkleinerungstechnik GmbH, 22844 Norderstedt (DE)
(72) Erfinder: HOLL, Wolfgang, 21720 Guderhandviertel (DE)
(74) Vertreter: terpatent Patentanwälte ter Smitten Eberlein-Van Hoof Rütten Daubert

(56) Entgegenhaltungen:
- EP-A1- 0 405 636
- EP-A2- 0 115 440
- DE-A1-102008 054 255
- GB-A- 198 120
- US-A- 1 530 615
- US-A- 3 167 261
- US-A- 5 042 728

## Beschreibung

Die Erfindung betrifft eine Mahlvorrichtung zum Feinmahlen von Körnerfrüchten, insbesondere Kaffeebohnen, mit einem Gehäuse, in dem ein Mahlwerk, das von mindestens einer Antriebsvorrichtung antreibbar ist, angeordnet ist, wobei das Mahlwerk mehrere Mahlwalzen aufweist, die mindestens zwei Mahlpassagen mit jeweils einem Mahlspalt definieren, derart, dass ein Mahlspalt durch einen geringsten Abstand d zweier benachbarter Mahlwalzen gebildet ist, wobei alle aufeinanderfolgenden Mahlpassagen Teil eines Produktführungskanals sind, wobei mindestens eine Anzahl n>2 Mahlwalzen vorgesehen sind, die derart versetzt zueinander angeordnet sind, dass eine Mahlwalze mit zwei benachbart angeordneten Mahlwalzen jeweils einen Mahlspalt d₁₋₍ₙ₋₁₎ ausbildet, so dass das Mahlwerk eine Anzahl (n-1) Mahlpassagen aufweist.

Derartige Mahlwerke sind aus dem Stand der Technik hinlänglich bekannt. So offenbart die europäische Patentanmeldung EP 2 412 246 A1 eine Mahlvorrichtung mit zwei Walzenpaaren und dementsprechend zwei Mahlpassagen für die industrielle Vermahlung von Kaffeebohnen. Auch die deutsche Patentschrift DE 42 34 991 C2 zeigt eine derartige Mahlvorrichtung zum Feinmahlen von Kaffeebohnen. Es sollte deutlich sein, dass die Anzahl Mahlpassagen den Feinmahlgrad wesentlich beeinflusst. Die Anzahl Mahlpassagen ist jedoch bei der gattungsgemäßen Mahlvorrichtung abhängig von den vorgesehenen Mahlwalzenpaaren. Aufgrund des großen benötigten Bauraums ist eine derartige Mahlvorrichtung auch lediglich für industrielle Anlagen geeignet. Ist nur ein geringer Bauraum vorhanden, wie im Extremfall bei Haushaltsgeräten, kommen Mahlscheiben zum Einsatz, die die Kaffeebohnen feinmahlen. Zudem weist eine gattungsgemäße Mahlvorrichtung den Nachteil auf, dass diese sehr unflexibel hinsichtlich einer Einstellung des Mahlgrades ist.

Gattungsgemäße Mahlvorrichtungen sind beispielsweise aus der US 1,530,615 A, der US 3,167,261 A, der EP 0 405 636 A1, EP 0 115 440 A2, der DE 10 2008 054 255 A1 und der GB 198 120 A bekannt. Zwar wird hierdurch der Bauraum verringert, jedoch ist es durch die unterschiedlich ausgerichteten Mahlpassagen schwierig das Mahlgut vollständig von einer Eintrittsöffnung zu einer Austrittsöffnung des Gehäuses zu führen.

Aufgabe der Erfindung ist es daher, eine Mahlvorrichtung zum Feinmahlen von Körnerfrüchten bereitzustellen, die die oben genannten Nachteile auf einfache und kostengünstige Weise vermeidet.

Diese Aufgabe wird dadurch gelöst, dass das Gehäuseteil einen durchlaufenden Produktführungskanal von einer Eintrittsöffnung zu einer Austrittsöffnung und Aussparungen für die Mahlwalzen aufweist.. Hierbei können zwei Mahlwalzen senkrecht übereinander angeordnet sein, während die dritte Mahlwalze neben den ersten beiden Mahlwalzen angeordnet ist. Auf diese Weise wird ein sehr kompaktes Mahlwerk bereitgestellt, wobei zudem noch eine Mahlwalze gegenüber den herkömmlichen Mahlwerken eingespart werden kann. Auch wird ein Produktführungskanal geschaffen, durch den die vermahlten Körnerfrüchte optimal zur Austrittsöffnung geführt werden, ohne im Gehäuse zurückzubleiben.

Dadurch, dass die Größe der Mahlspalte d₁₋₍ₙ₋₁₎ in Schwerkraftrichtung abnimmt, ist es auf einfache Weise möglich, eine Feinvermahlung der Körnerfrüchte zu gewährleisten.

In einer besonders vorteilhaften Ausführungsform ist mindestens eine Mahlwalze durch eine Verstelleinrichtung derart verstellbar gelagert, dass ein Durchmesserabstand D₁₋ₙ zu benachbart zu dieser verstellbaren Mahlwalze angeordneten Mahlwalzen veränderlich ist und damit mindestens ein Mahlspalt d₁₋₍ₙ₋₁₎ veränderlich ist. Hierdurch ist auf besonders einfache Weise eine Einstellung des Mahlgrades zu bewerkstelligen. In besonders vorteilhafter Weise ist hierbei zumindest eine Mahlwalze, die zwei Mahlspalte d mit benachbarten Mahlwalzen ausbildet, verstellbar gelagert.

Um die Körnerfrüchte in optimaler Weise in der Mahlvorrichtung, und hierbei insbesondere im Mahlwerk, zu führen, ist es vorteilhaft, wenn in dem Mahlwerk, in Schwerkraftrichtung gesehen, aufeinanderfolgende Mahlwalzen jeweils einen gegenläufigen Drehsinn aufweisen.

In besonders vorteilhafter Weise steigen in Schwerkraftrichtung gesehen die Drehgeschwindigkeiten D₁₋ₙ der aufeinanderfolgenden Mahlwalzen an. Auch hierdurch wird eine optimale Feinvermahlung der Körnerfrüchte gewährleistet.

In vorteilhafter Weise ist die Antriebsvorrichtung mit einem Getriebe wirkverbunden, über das die einzelnen Mahlwalzen antreibbar sind. In besonders vorteilhafter Weise kann für jede Mahlwalze auch eine Antriebsvorrichtung vorgesehen sein. Die Drehzahl jeder Mahlwalze kann dann individuell, beispielsweise mittels eines Frequenzumformers, verstellt werden.

Die Erfindung wird anhand einer Zeichnung näher erläutert, hierbei zeigt:
Figur 1 eine perspektivische Ansicht einer erfindungsgemäßen Mahlvorrchtung; und
Figur 2 eine schematische Ansicht eines Mahlerwerkes der Mahlvorrichtung aus Figur 1.

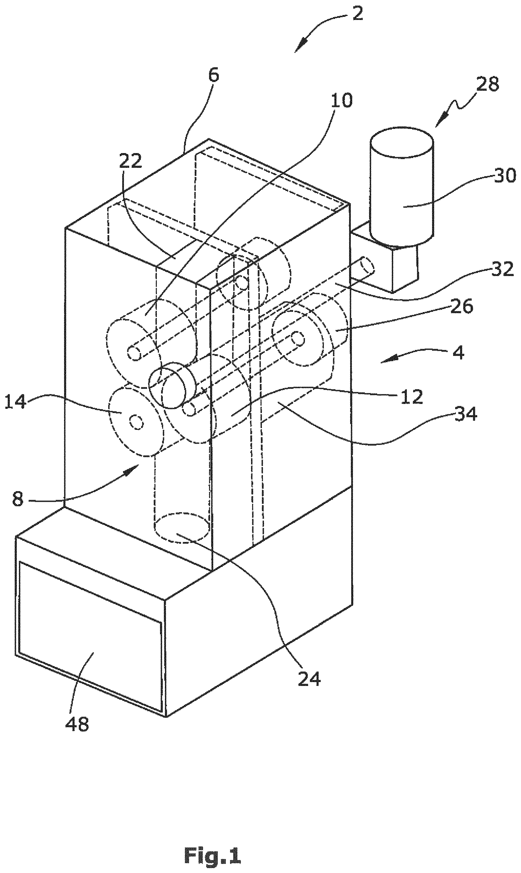

Figur 1 zeigt in einer perspektivischen Ansicht eine erfindungsgemäße Mahlvorrichtung zum Feinmahlen von Körnerfrüchten. Im vorliegenden Ausführungsbeispiel wird die Mahlvorrichtung zum Feinmahlen von Kaffeebohnen eingesetzt. Die Mahlvorrichtung 2 weist ein Gehäuse 4 auf, das weitere Gehäuseteile besitzt. In einem Gehäuseteil 6 ist ein Mahlwerk 8 vorgesehen, das im vorliegenden Ausführungsbeispiel drei Mahlwalzen 10, 12, 14 aufweist, die zwei Mahlpassagen 16, 18 besitzen, die jeweils einen Mahlspalt d₁ und d₂ aufweisen. Die Mahlwalzen 10, 12, 14 können geriffelt oder glatt ausgeführt sein. Die Mahlpassagen 16 und 18 sind Teil eines Produktführungskanals 20, der in Schwerkraftrichtung gesehen von einer Eintrittsöffnung 22 zu einer Austrittsöffnung 24 führt. Im vorliegenden Ausführungsbeispiel werden alle Mahlwalzen 10, 12 und 14 von jeweils einem Antriebsmotor 26 angetrieben, wobei in der Darstellung lediglich die Antriebsmotoren 26 für die Mahlwalzen 10 und 12 dargestellt sind. Die Mahlwalzen 10 und 14 sind fest senkrecht übereinander angeordnet. Die Mahlwalze 12 ist verstellbar gelagert, so dass ein Durchmesserabstand D₁, D₂ zu benachbart zu dieser verstellbaren Mahlwalze 12 angeordneten Mahlwalzen 10, 14 veränderlich ist. Hierdurch die verstellbare Anordnung ist es möglich, den Mahlspalt d₁ und/oder d₂ auf einfache Weise zu verkleinern oder zu vergrößern. Die Verstellung erfolgt hierbei über eine Verstelleinrichtung 28, die einen Verstellmotor 30 aufweist, die eine Verstellspindel 32 antreibt, die wiederum mit einem Exzenter 34 kämmt, der drehfest mit der Mahlwalze 12 verbunden ist.

Um eine optimale Feinmahlung zu gewährleisten, ist es sinnvoll, die Größe der Mahlspalte d₁, d₂ in Schwerkraftrichtung zu verringern.

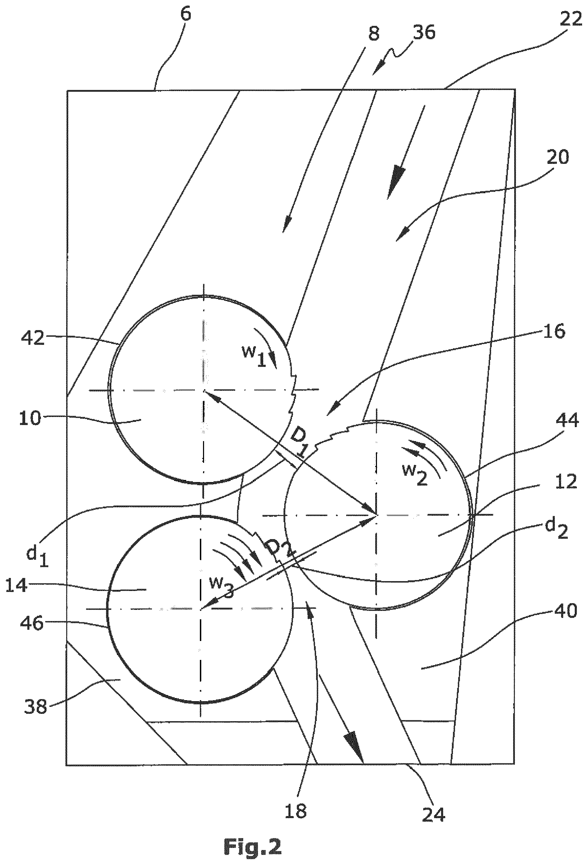

Wie aus Figur 2 deutlich hervorgeht, besitzen die Mahlwalzen 10, 12, 14 einen zur jeweiligen Mahlpassage 16, 18 gerichteten Drehsinn, was dazu führt, dass die jeweiligen Mahlwalzen 10, 12 und 14, die jeweils einen Mahlspalt d₁, d₂ ausbilden, einen gegenläufigen Drehsinn besitzen. Eine weitere Verbesserung der Feinmahlung wird dadurch erreicht, dass in Schwerkraftrichtung gesehen die Drehgeschwindigkeiten w₁, w₂ und w₃ der Mahlwalzen 10, 12, 14 ansteigen.

In Figur 2 ist im Wesentlichen in einer schematischen Ansicht das Gehäuseteil 6 des Mahlwerkes 8 dargestellt. Das Gehäuseteil 6 weist hier einen Blecheinsatz 36 mit Blechteilen 38, 40 auf, der den Produktführungskanal 20 ausbildet und Aussparungen 42, 44, 46 für die Mahlwalzen 10, 12, 14 besitzt. Das Blechteil 40 ist hierbei zusammen mit der Mahlwalze 12 verstellbar. Es ist jedoch auch denkbar, dass die Aussparung 44 einfach größer ausgeführt ist, um eine Verstellung der Mahlwalze 12 zu ermöglichen. Eine Produktaufgabe über die Eintrittsöffnung 22 kann beispielsweise mit einem Vibrationsring oder einem Walzendosierer erfolgen. Der gemahlte Kaffee wird von den Mahlwalzen 10, 12, 14 und der Schwerkraft in Richtung der Austrittsöffnung 24 getrieben und gelangt von dort in einen Mahlraumauffangbereich 48 und besitzt eine Korngöße von < 500 µm.

Wie bereits erwähnt, wird bei dem vorliegenden Ausführungsbeispiel jede Mahlwalze 10, 12, 14 von einem Antriebsmotor 26 angetrieben. Es ist natürlich auch möglich, lediglich einen Antriebsmotor vorzusehen, der über ein Getriebe die jeweiligen Mahlwalzen 10, 12, 14 antreibt.

### Bezugszeichenliste:

Mahlvorrichtung 2
Gehäuse 4
Gehäuseteil 6
Mahlwerk 8
Mahlwalze 10
Mahlwalze 12
Mahlwalze 14
Mahlpassage 16
Mahlpassage 18
Produktführungskanals 20
Eintrittsöffnung 22
Austrittsöffnung 24
Antriebsmotor 26
Verstelleinrichtung 28
Verstellmotor 30
Verstellspindel 32
Exzenter 34
Blecheinsatz 36
Blechteil 38
Blechteil 40
Aussparung 42
Aussparung 44
Aussparung 46
Mahlraumauffangbereich 48.

## Patentansprüche

1. Mahlvorrichtung zum Feinmahlen von Körnerfrüchten, insbesondere Kaffeebohnen, mit einem Gehäuse (4), in dem ein Mahlwerk (8), dass von mindestens einer Antriebsvorrichtung (26) antreibbar ist, angeordnet ist, wobei das Mahlwerk (8) mehrere Mahlwalzen (10, 12, 14) aufweist, die mindestens zwei Mahlpassagen (16, 18) mit jeweils einem Mahlspalt definieren, derart, dass ein Mahlspalt durch einen geringsten Abstand d zweier benachbarter Mahlwalzen gebildet ist, wobei alle aufeinanderfolgenden Mahlpassagen Teil eines Produktführungskanals sind, wobei mindestens eine Anzahl n>2 Mahlwalzen (10, 12, 14) vorgesehen sind, die derart versetzt zueinander angeordnet sind, dass eine Mahlwalze (12) mit zwei benachbart angeordneten Mahlwalzen (10, 14) jeweils einen Mahlspalt d₁₋₍ₙ₋₁₎ ausbildet, so dass das Mahlwerk (8) eine Anzahl (n-1) Mahlpassagen (16, 18) aufweist, **dadurch gekennzeichnet, dass** ein Gehäuseteil (6) für das Mahlwerk (8) vorgesehen ist, wobei das Gehäuseteil (6) einen durchlaufenden Produktführungskanal (20) von einer Eintrittsöffnung (22) zu einer Austrittsöffnung (24) und Aussparungen (30, 32, 34) für die Mahlwalzen aufweist.

2. Mahlvorrichtung nach Anspruch 1, **dadurch gekennzeichnet, dass** die Größe der Mahlspalte d₁₋₍ₙ₋₁₎ in Schwerkraftrichtung abnimmt.

3. Mahlvorrichtung nach Anspruch 1 oder 2, **dadurch gekennzeichnet, dass** mindestens eine Mahlwalze (12) durch eine Verstelleinrichtung (28) derart verstellbar gelagert ist, dass ein Durchmesserabstand D1-n zu benachbart zu dieser verstellbaren Mahlwalze (12) angeordneten Mahlwalzen (10, 14) veränderlich ist und damit mindestens ein Mahlspalt d₁₋₍ₙ₋₁₎ veränderlich ist.

4. Mahlvorrichtung nach Anspruch 3, **dadurch gekennzeichnet, dass** zumindest eine Mahlwalze (12) die zwei Mahlspalte d₁, d₂ mit benachbarten Mahlwalzen (10, 14) ausbildet, verstellbar gelagert ist.

5. Mahlvorrichtung nach einem der vorhergehenden Ansprüche, **dadurch gekennzeichnet, dass** in dem Mahlwerk (8), in Schwerkraftrichtung gesehen, aufeinanderfolgende Mahlwalzen (10, 12, 14) jeweils einen gegenläufigen Drehsinn aufweisen.

6. Mahlvorrichtung nach Anspruch 5, **dadurch gekennzeichnet, dass** in dem Mahlwerk (8) jede Mahlwalze (10, 12, 14) einen zur jeweiligen Mahlpassage gerichteten Drehsinn aufweist.

7. Mahlvorrichtung nach einem der vorhergehenden Ansprüche, **dadurch gekennzeichnet, dass** in Schwerkraftrichtung gesehen die Drehgeschwindigkeiten w₁₋ₙ der aufeinanderfolgenden Mahlwalzen (10, 12, 14) ansteigen.

8. Mahlvorrichtung nach einem der vorhergehenden Ansprüche, **dadurch gekennzeichnet, dass** die Antriebsvorrichtung (26) mit einem Getriebe wirkverbunden ist, über das die einzelnen Mahlwalzen (10, 12, 14) antreibbar sind.

9. Mahlvorrichtung nach einem der vorhergehenden Ansprüche, **dadurch gekennzeichnet, dass** für jede Mahlwalze (10, 12, 14) eine Antriebsvorrichtung (26) vorgesehen ist.

## Claims

1. Milling device for the fine milling of cereals, in particular coffee beans, comprising a housing (4) in which a grinder (8) is arranged that can be driven by at least one driving device (26), the grinder (8) comprising a plurality of milling rollers (10, 12, 14), which define at least two milling passages (16, 18), each with a milling gap, such that a milling gap is formed by the smallest distance d between two adjacent milling rollers, wherein all successive milling passages are part of a product guide channel, wherein at least a number n>2 milling rollers (10, 12, 14) are provided, which are arranged offset to one another such that a milling roller (12) forms a milling gap d₁₋₍ₙ₋₁₎ with two adjacent milling rollers (10, 14) so that the grinder (8) has a number (n-1) of milling passages (16, 18), **characterized in that** a housing part (6) is provided for the grinder (8), said housing part (6) comprising a continuous product guide channel (20) extending from an inlet opening (22) to an outlet opening (24) and having recesses (30, 32, 34) for the milling rollers.

2. Milling device of claim 1, **characterized in that** the size of the milling gaps d₁₋₍ₙ₋₁₎ decreases in the direction of gravity.

3. Milling device of claim 1 or 2, **characterized in that** at least one milling roller (12) is supported by an adjusting device (28) to be adjustable such that a diameter distance D1-n to milling rollers (10, 14) arranged adjacent to said adjustable milling roller (12) is variable and thus at least one milling gap d₁₋₍ₙ₋₁₎ is variable.

4. Milling device of claim 3, **characterized in that** at least one milling roller (12) which forms two milling gaps d1, d2 with adjacent milling rollers (10, 14) is adjustably supported.

5. Milling device of one of the preceding claims, **characterized in that** in the grinder (8), seen in the direction of gravity, successive milling rollers (10, 12, 14) each have an opposite sense of rotation.

6. Milling device of claim 5, **characterized in that** in the grinder (8) each milling roller (10, 12, 14) has a sense of rotation oriented towards the respective milling passage.

7. Milling device of one of the preceding claims, **characterized in that**, seen in the direction of gravity, the rotational speeds W₁₋ₙ of the successive milling rollers (10, 12, 14) increase.

8. Milling device of one of the preceding claims, **characterized in that** the driving device (26) is operatively connected to a gear mechanism via which the individual milling rollers (10, 12, 14) can be driven.

9. Milling device of one of the preceding claims, **characterized in that** a driving device (26) is provided for each milling roller (10, 12, 14).

## Revendications

1. Dispositif de broyage pour le broyage fin de céréales, en particulier de grains de café, avec un carter (4) dans lequel un broyeur (8) est disposé qui est apte à être entrainé par au moins un dispositif d'entrainement (26), le broyeur (8) comprenant plusieurs rouleaux de broyage (10, 12, 14) qui définissent au moins deux passages de broyage (16, 18), chacun avec une fente de broyage, de sorte qu'une fente de broyage est formée par la plus petite distance d entre deux rouleaux de broyage adjacents, tous les passages de broyage successifs faisant partie d'un canal de guidage de produit, au moins un nombre n>2 de rouleaux de broyage (10, 12, 14) étant prévus, qui sont disposés décalés l'un par rapport à l'autre de sorte qu'un rouleau de broyage (12) avec deux rouleaux de broyage adjacents (10, 14) forment chacun une fente de broyage d₁₋₍ₙ₋₁₎, de sorte que le broyeur (8) présente un certain nombre (n-1) de passages de broyage (16, 18), **caractérisé en ce qu'**une partie de carter (6) est prévue pour le broyeur (8), la partie de carter (6) ayant un canal de guidage de produit continu (20) s'étendant depuis une ouverture d'entrée (22) vers une ouverture de sortie (24) et présentant des évidements (30, 32, 34) pour les rouleaux de broyage.

2. Dispositif de broyage selon la revendication 1, **caractérisé en ce que** la taille des fentes de broyage d₁₋₍ₙ₋₁₎ diminue dans le sens de la gravité.

3. Dispositif de broyage selon la revendication 1 ou 2, **caractérisé en ce qu'**au moins un rouleau de broyage (12) est supporté de manière ajustable par un dispositif d'ajustage (28) d'une telle sorte qu'une distance de diamètre D1-n aux rouleaux de broyage (10, 14) adjacents de ce rouleau de broyage ajustable (12) est variable et donc au moins une fente de broyage d₁₋₍ₙ₋₁₎ est variable.

4. Dispositif de broyage selon la revendication 3, **caractérisé en ce qu'**au moins un rouleau de broyage (12) qui forme deux fentes de broyage d1, d2 avec des rouleaux de broyage adjacents (10, 14) est monté de manière ajustable.

5. Dispositif de broyage selon l'une quelconque des revendications précédentes, **caractérisé en ce que** dans le broyeur (8), vu dans le sens de gravité, les rouleaux de broyage successifs (10, 12, 14) ont chacun un sens de rotation opposé.

6. Dispositif de broyage selon la revendication 5, **caractérisé en ce que** dans le broyeur (8) chaque rouleau de broyage (10, 12, 14) a un sens de rotation orienté vers le passage de broyage respectif.

7. Dispositif de broyage selon l'une quelconque des revendications précédentes, **caractérisé en ce que** les vitesses de rotation W₁₋ₙ des rouleaux de broyage successifs (10, 12, 14) augmentent, vu dans le sens de gravité.

8. Dispositif de broyage selon l'une quelconque des revendications précédentes, **caractérisé en ce que** le dispositif d'entrainement (26) est relié fonctionnellement à un engrenage par lequel les différents rouleaux de broyage (10, 12, 14) peuvent être entrainés.

9. Dispositif de broyage selon l'une quelconque des revendications précédentes, **caractérisé en ce qu'**un dispositif d'entrainement (26) est prévu pour chaque rouleau de broyage (10, 12, 14).
